# EUROPEAN PATENT APPLICATION

(11) **EP 2 851 973 A1**
(43) Date of publication of application: **25.03.2015**
(21) Application number: 13791664.9
(22) Date of filing: 10.05.2013
(51) Int. Cl.: H01M 2/10, B60K 6/28, B60L 3/04, H01M 10/44

(54) **BATTERY ENERGY DISCHARGE DEVICE**

(30) Priority: 15.05.2012 JP 2012111649
(71) Applicant: Mitsubishi Jidosha Kogyo Kabushiki Kaisha, Tokyo 108-8410 (JP)
(72) Inventor: TANIYAMA Koichi, Tokyo 108-8410 (JP); HARAGUCHI Kazunori, Tokyo 108-8410 (JP)
(74) Representative: Vossius & Partner
(86) International application number: PCT/JP2013/063184
(87) International publication number: WO 2013/172271

(57) **Abstract**

There is provided a battery energy discharge device in which water is injected into a battery pack, for example, at the time of the occurrence of an abnormal situation in a vehicle, whereby the water is converted into an electrolyte aqueous solution having a high electric conductivity by the electrolyte substance provided in the battery pack, heating is suppressed by the electrolyte aqueous solution, and the battery can be discharged quickly. An electrolyte substance M is provided inside a battery pack 5 accommodating a vehicle drive battery 8 or inside an air duct 64 (water injection route) connected to the battery pack; in particular, in the case that terminal electrodes are disposed on the upper side of the battery 8, the height position H of the electrolyte substance from the lower face of the battery pack is set to a position in which the electrolyte substance is dissolved in water after the battery has securely obtained a predetermined water-submerged height, whereby the cooling performance for the battery can be obtained securely at the time when the electrolyte aqueous solution makes contact with the terminal electrodes of the battery.

## Description

### Technical Field

The present invention relates to a battery energy discharge device mounted in a vehicle, and more particularly, to a battery energy discharge device for discharging the electric energy of a drive battery accommodated inside a battery pack mounted in a vehicle.

### Background Art

In vehicles, more particularly, electric-type vehicles, such as electric vehicles (hereafter referred to as EV) that travel using a motor serving as a drive source, plug-in hybrid vehicles (hereafter referred to as PHV) or vehicles that travel using, for example a motor driven by a fuel cell, a motor serving as a drive source and an inverter (electric power control apparatus) are accommodated on the side of a drive source accommodating compartment, a drive battery is disposed on the lower side of the passenger compartment, the two are connected using high-voltage cables so that electric power can be transferred therebetween. The drive battery is usually accommodated inside a battery pack serving as a housing, and is supported by the lower section of the floor of the passenger compartment.

If an electric vehicle, such as an EV or PHV, equipped with such a drive battery caused an accident or the like and the vehicle body is damaged and the vehicle fell into an emergency, then rescue and recovery activities for the vehicle are carried out, and the connection between the high-voltage electric power source circuit and the battery of the battery pack in the disabled vehicle is disconnected according to the degree of the damage, thereby preventing electric shock, firing, etc.

For example, in the case that the connection between the high-voltage electric power source circuit and the battery is disconnected, usually, a through-hole is opened by opening the through-hole service plug lid provided in the floor of the vehicle body, a service plug is extracted through this through-hole from a switch capable of switching the power source circuit provided inside the battery pack, thereby disconnecting the connection between the high-voltage electric power source circuit and the battery. In addition, hereafter, according to the degree of the damage of the vehicle, a worker wearing insulating protective equipment fills the inside of the battery pack with water through the through-hole or a duct of an air conditioner for cooling, whereby the battery is discharged for several hours, the electric energy stored in the battery is discharged and deactivated, and electric shock, firing, etc. are prevented. Then, the disabled vehicle is moved and conveyed using a wrecker truck or the like as necessary.

Patent Document 1 discloses a method in which, in order that the discharge of a used pellet-shaped lithium battery is facilitated, the battery is submerged in salt water to externally short-circuit the battery. Furthermore, Patent Document 2 proposes a technique in which a water tank is attached to the outer box of an explosion-proof battery for use in an industrial vehicle, the water of the water tank is supplied into the outer box of the battery in an emergency to discharge the electric energy thereof, thereby maintaining the battery in a non-dangerous state.

On the other hand, for example, Patent Documents 3 and 4 propose a technique in which detecting means detects an impact at the time of a vehicle collision, at least two cells of a battery are short-circuited inside a battery case by mechanical short-circuiting means to discharge the electric energy of the battery, thereby disabling electric power supply to the outside, and preventing electric shock and damage at the time when auxiliary equipment or the like makes contact with external circuits.

### Prior Art Document

### Patent Document

Patent Document 1: JP-A-2010-277737
Patent Document 2: JP-A-59-79964
Patent Document 3: JP-A-9-284904
Patent Document 4: JP-A-2003-189415

### Summary of the Invention

### Problem that the Invention is to solve

However, the technique of Patent Document 1 is inappropriate for the process of discharging the electric energy of the drive battery accommodated in an on-vehicle battery pack, and Patent Document 2 discloses a configuration in which the water tank is always installed, and this configuration is inappropriate for vehicles. Furthermore, the discharge processing devices according to Patent Documents 3 and 4 are applicable to the process for discharging and deactivating the electric energy stored in the battery accommodated inside the battery pack of a vehicle; however, in these methods, external short-circuit is required to be carried out by mechanical operation. Hence, in the case that the mechanism that is used to discharge the electric energy is broken due to impact when an abnormal situation, such as a vehicle collision, occurs, there is a risk that the function for discharging the electric energy cannot be exerted. Moreover, even if external short-circuit is carried out, there is no method for efficiently dissipating the heat generated by short-circuit; hence, there is a risk of causing the battery to catch fire if a current larger than the assumed amount flows.

To solve these problems, water is injected from the outside into the battery pack of a vehicle in an abnormal situation, whereby the battery is cooled and at the same time externally short-circuited with the water inside the battery pack, and the energy stored in the battery can be discharged. However, in the case that tap water is used, since its electric conductivity is low, even if the battery pack is completely filled with tap water, it takes a long time until the electric energy is completely discharged; hence, an accident processing worker is required to sufficiently consider protection against electric shock during the time and may take time and labor for the work.

On the other hand, it is possible that salt water having a high electric conductivity is directly injected into the battery pack to shorten the discharge time; however, in a sudden situation, such as a traffic accident, it is not easy to prepare salt and to adjust the concentration of salt water. In addition, in the case that salt water is injected directly, before a sufficient amount of salt water accumulates inside the pack, the salt water makes direct contact with the terminals of the battery and causes short-circuit, and the heat generated by short-circuit may cause firing; hence there are some problems in applying this method.

The present invention is intended to provide a battery energy discharge device in which water is injected into a battery pack, for example, at the time of the occurrence of an abnormal situation in a vehicle, whereby the water is converted into an electrolyte aqueous solution having a high electric conductivity by the electrolyte substance provided in the battery pack, heating is suppressed by the electrolyte aqueous solution, and the battery can be discharged quickly. Means for solving the Problem

In order to achieve the above-mentioned task, the invention according to claim 1 is characterized in that an electrolyte substance is provided inside a battery pack accommodating a battery for driving a vehicle or inside a water injection route connected to the battery pack.

The invention according to claim 2 is the battery energy discharge device according to claim 1, characterized in that a terminal electrode is provided on an upper side of the battery, and a height position of the electrolyte substance from a lower face of the battery pack is set to a position in which the electrolyte substance is dissolved in water after the battery has securely obtained a predetermined water-submerged height.

The invention according to claim 3 is the battery energy discharge device according to claim 1 or 2, characterized in that the battery is disposed between a water injection port of the water injection route provided in the battery pack and an installation position of the electrolyte substance.

The invention according to claim 4 is the battery energy discharge device according to any one of claims 1 to 3, characterized in that the electrolyte substance is provided at a position higher than half-height of the battery pack.

The invention according to claim 5 is the battery energy discharge device according to any one of claims 1 to 3, characterized in that the electrolyte substance is provided above a terminal electrode.

### Advantage of the Invention

With the invention according to claim 1, the electrolyte substance is provided in the battery pack or in the water injection route; hence, when water is injected into the battery pack through the water injection route in an emergency, the electrolyte substance is dissolved in the water accumulating in the battery pack, the battery pack is filled with an electrolyte aqueous solution, whereby the water is converted into the electrolyte aqueous solution having a high electric conductivity, and the electrolyte aqueous solution can discharges the battery at a high discharge efficiency.

With the invention according to claim 2, the electrolyte substance is dissolved in water after the battery inside the battery pack has securely obtained the predetermined water-submerged height, in other words, after a certain level of battery cooling performance or higher has been obtained securely, the salt is dissolved in water and becomes the electrolyte aqueous solution, whereby at the time when the electrolyte aqueous solution makes contact with the terminal electrodes of the battery, the cooling performance for the battery has been securely obtained; as a result, a situation in which the battery generates heat excessively can be prevented.

With the invention according to claim 3, the installation position of the electrolyte substance is securely obtained on the opposite side of the water injection port, with the battery disposed therebetween, whereby it is possible to exclude the possibility that the electrolyte substance is dissolved by water splashes immediately after the start of water injection and that the electrolyte aqueous solution makes contact with the terminal electrodes of the battery before a sufficient amount of water accumulates inside the battery pack; as a result, it is possible to reduce the occurrence of a situation in which the electrolyte aqueous solution makes contact with the terminal electrodes immediately after the water injection and heat is generated.

With the invention according to claim 4, at the time when the water has been supplied into the battery pack up to its half-height, it is possible to confirm that the cooling performance for the central section of the battery, wherein the temperature is apt to rise, has been securely obtained sufficiently; furthermore, since the water is supplied thereafter to a level higher than the half-height of the battery pack, it is possible to confirm that the electrolyte substance starts to be dissolved, and it is confirmed thereafter that heat generation from the drive battery can be suppressed, and then the injection of the cooling water can be carried out safely.

With the invention according to claim 5, the electrolyte substance is provided above the terminal electrodes, whereby the electrolyte substance is dissolved after the battery has been submerged in water up to the terminal electrodes by the water injection; hence, it is possible to securely prevent a situation in which the electrolyte aqueous solution makes direct contact with the terminal electrodes and heat is generated immediately.

### Brief Description of the Drawings

FIG. 1 is a schematic side view showing the main sections of a vehicle equipped with an battery energy discharge device according to the present invention;
FIG. 2 is an enlarged plan view showing the main sections of a battery pack mounted in the vehicle shown in FIG. 1;
FIG. 3 is an enlarged side cross-sectional view showing the main sections of the floor of the vehicle shown in FIG. 1 and the battery pack;
FIG. 4 is a cutaway side view showing the main sections of power source terminals and a switch inside the battery pack shown in FIG. 2;
FIG. 5 is a cutaway plan view showing the main sections of the power source terminals and the switch inside the battery pack shown in FIG. 2;
FIGS. 6(a), 6(b) and 6(c) are views illustrating the functions of the battery energy discharge device shown in FIG. 1; FIG. 6(a) shows a state in which water injection starts, FIG. 6 (b) shows a state in which water injection is under way, and FIG. 6(c) shows a state in which water injection is completed and energy is discharged;
FIGS. 7(a) and 7(b) are views showing electrolytic substance containers for use in the battery energy discharge device shown in FIG. 1; FIG. 7(a) is an enlarged front view showing a container, and FIG. 7(b) is a side cross-sectional view showing a modification example;
FIGS. 8(a) and 8(b) are views showing modification examples of containers that are used instead of the electrolytic substance containers shown in FIGS. 7(a) and 7(b); FIG. 8(a) shows a second embodiment, FIG. 8(b) shows a third embodiment, and FIG. 8 (c) shows a fourth embodiment; and
FIG. 9 is a view illustrating the disposition of an electrolytic substance container according to a fifth embodiment.

### Mode for Carrying Out the Invention

A battery energy discharge device according to a first embodiment of the present invention will be described below.

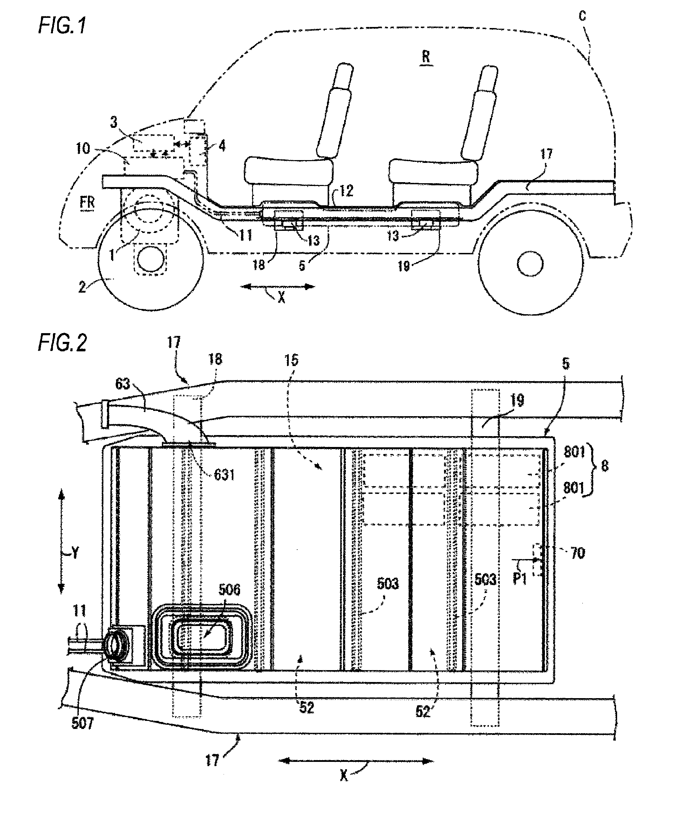

The battery energy discharge device according to the present invention is mounted in a vehicle C as shown in FIG. 1.

The vehicle C will herein be described generally. The vehicle C is an electric vehicle (EV) that travels using only a motor; however, alternatively, the vehicle may be, for example, a PHV that uses both a motor and an internal combustion engine as drive sources or a vehicle that uses, for example, a motor driven by a fuel cell.

The vehicle C shown in FIG. 1 is equipped, in front of its passenger compartment R, with a front accommodation compartment FR in which an electric rotating machine (motor generator) 1 serving as a power source, an electric power converter 10 for adjusting electric power to be supplied to the electric rotating machine 1, a driving apparatus (power train), not shown, connected to the wheels 2 of the vehicle C, an electric power control apparatus (MCU) 3 for controlling the drive of the electric rotating machine 1 and the electric power converter 10, and a vehicle control apparatus (PCU) 4 for controlling the vehicle are disposed. On the other hand, a battery pack 5 accommodating a drive battery 8 is installed under the floor 12 of the passenger compartment R.

As shown in FIG. 1, the electric rotating machine 1 of the vehicle C is connected to the drive battery 8 of the battery pack 5 via the electric power converter 10 using high-voltage cables 11. The electric power converter 10 provided in the middle of the high-voltage cables 11 is controlled by the electric power control apparatus 3 and controls the transfer of electric power between the battery 8 and the electric rotating machine 1.

As shown in FIG. 1, the battery pack 5 accommodating the drive battery 8 is disposed just under the floor 12 of the passenger compartment R. As shown in FIGS. 1 and 2, the battery pack 5 is supported by the left and right side members 17 disposed in parallel in the front-rear direction X of the vehicle body and by the cross members 18 and 19 provided between these members, and fastened with a plurality of fastening fittings 13 to the members that are respectively opposed thereto.

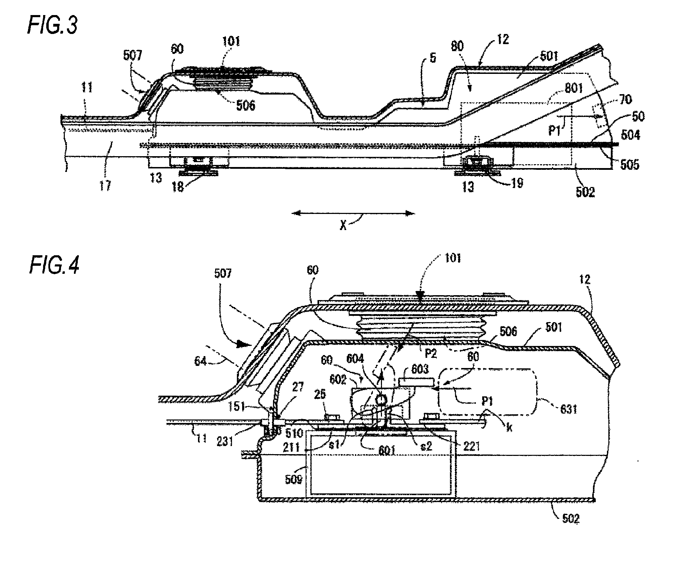

As shown in FIGS. 2 and 3, a battery case 50 having a flat box shape is formed such that its upper and lower half sections 501 and 502 are stacked integrally. Each of the upper and lower half sections 501 and 502 is integrally formed of a resin having an electric insulation property. In particular, inside the lower half section 502, a plurality of sill plates 503 (see FIG. 2) protrude, thereby dividing the pack inner chamber (battery accommodation section) 15 thereof into a plurality of battery cell accommodation regions 52 (indicated by two-dot chain lines in FIG. 2), preventing displacement of the battery cells, and reinforcing the lower half section 502.

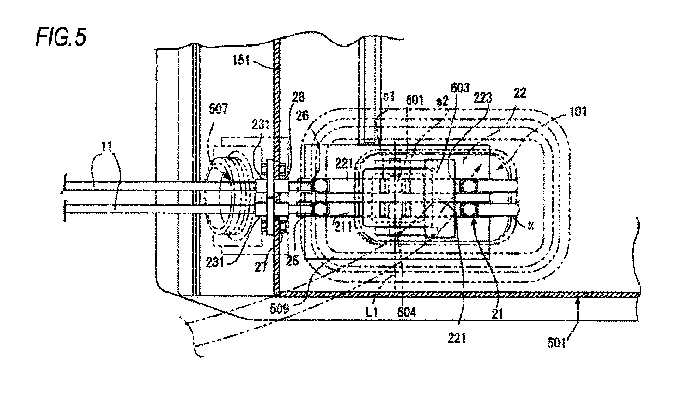

The resin used as the material of the upper and lower half sections 501 and 502 is made by reinforcing the base material composed of, for example, polypropylene with short glass fibers. The upper and lower half sections 501 and 502 are formed into a flat box shaped housing by fastening their overlapped flange sections 504 and 505 to each other with bolts, not shown. A plurality of battery cells 801 constituting the drive battery 8 are connected, for example, in series and connected to the power source side terminal members 21 and 22 and the switch 60 shown in FIGS. 4 and 5 via an electric circuit, not shown.

In the upper half section 501 positioned just above the switch 60, an upward opening 506 (see FIG. 2) for the operation of the switch and a cooling air introducing inlet 507 connected to the delivery passage of an air conditioner, not shown, are formed, and furthermore, on the opposite side of the cooling air introducing inlet 507 in the left-right direction, an exhaust side air duct 63 connected to the suction passage of the air conditioner, not shown, is installed.

As shown in FIG. 4, the upward opening 506 is connected to a normally closed port 101 serving as a working hole on the side of the floor 1 via a vertical elastic cylindrical member 60. The cooling air introducing inlet 507 communicates with the delivery passage of the air conditioner, not shown, via a suction side duct 64.

As shown in FIG. 5, in a front wall section 151 facing the front side of the vehicle body, serving as one side of the battery pack 5, two cable introducing holes 27 and 28 are formed. The respective high-voltage cables 11 are passed through these holes, and each cable is fastened to the front wall section 151 using a terminal holder 231 that is integrally installed thereon.

As shown in FIG. 2, in the pack inner chamber 15 of the battery pack 5, the plurality of battery cells 801 are accommodated and the battery cells 801 are connected to the power source side terminal members 21 and 22 (see FIG. 5) serving as high-voltage terminals via the connection circuit, not shown, inside the pack.

As shown in FIGS. 4 and 5, the power source side terminal members 21 and 22 are secured onto a support frame 509 so as to be insulated from each other, and to the left end section of the support frame and serving as the leading end thereof, the cable side connection terminals 25 and 26 at the leading ends of the high-voltage cables 11 extending from the electric power control apparatus 3 on the side of the electric rotating machine 1 are fastened as shown in FIGS. 4 and 5.

As shown in FIG. 4, the pair of power source side terminal members 21 and 22 is respectively supported by the lower half section 502 of the battery case 50 via insulating materials 510 and via the support frame 509. As shown in FIGS. 4 and 5, the pair of power source side terminal members 21 and 22 is divided into two parts in the longitudinal direction, that is, cable side part sections 211 and 221 and battery side part sections 221 and 222, and the switch 60 is disposed at the divided sections.

To the cable side part sections 211 and 221, the high-voltage cables 11 are fastened with bolts, and to the battery side part sections 221 and 222, the end sections k of the electric circuit, not shown, in which the plurality of battery cells 802 are connected in series, are overlapped and fastened with bolts.

The ends of the cable side connection parts 211 and 221 on one side and the ends of the battery side part sections 221 and 222 on the other side, being opposed to each other, are bent upward so as to form pairs of connection part sections s1 and s2. Across these pairs of connection part sections s1 and s2, the pair of insertion plugs 601 and 601 of the switch 60 is connected so as to be disconnectable.

The pair of insertion plugs 601 and 601 is integrally joined to an insulating insertion bracket 602, and to the left and right side wall sections of this insertion bracket 602, a U-shaped handle 603 is connected so as to be rockable via a pin 604 having the same center line L1. With this configuration, the handle 603 is installed so as to be placed at a standby position p1 during normal state, and so as to be rocked to an upward-directed use position p2 and so as to be extractable during use. The pair of insertion plugs 601 and 601, the insertion bracket 602 and the handle 603 constitute the switch 60.

In the battery pack 5 accommodating the insertion plugs 60 having the above-mentioned configuration and the drive battery 8, as shown in FIGS. 2 and 3, the installation position P1 of an electrolyte substance is set on the inner wall of the upper half section 501 and on the opposite side of the upward opening 506 and the exhaust side air duct 64, with the drive battery 8 disposed therebetween. At the installation position P1, an electrolytic substance container 70 is installed.

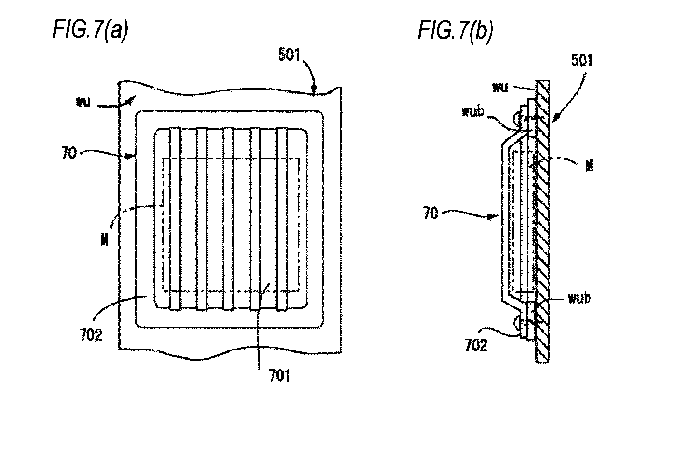

As shown in FIG. 7(a), the electrolyte substance container (hereafter simply referred to as the container) 70 may merely be, for example, a swollen pocket-like container having numerous slits 701 for facilitating intrusion of water; inside the container 70, an electrolyte substance M is accommodated, and the peripheral flange 702 of the container 80 is bonded to the inner wall wu of the upper half section 501. Furthermore, as shown in FIG. 7(b), the peripheral flange 702 may be screwed into screw fixing bosses wub formed on the inner wall wu, instead of bonding, or other fixing means may also be used.

Moreover, the water solubility of the electrolyte substance M has an appropriate range; the electrolyte substance M having too low water solubility does not satisfy the requirements of the present invention, and the electrolyte substance M having too high water solubility may cause deliquescence; hence, the electrolyte substance M capable of avoiding these problems is used. What's more, if the electrolyte concentration of the aqueous solution thereof becomes too high, an external short circuit occurs abruptly in a short time, and the battery may generate abnormal heat; hence, the amount of the electrolyte substance M to be contained in the container 70 is set to an amount to the extent of not causing the risk of abnormal heating.

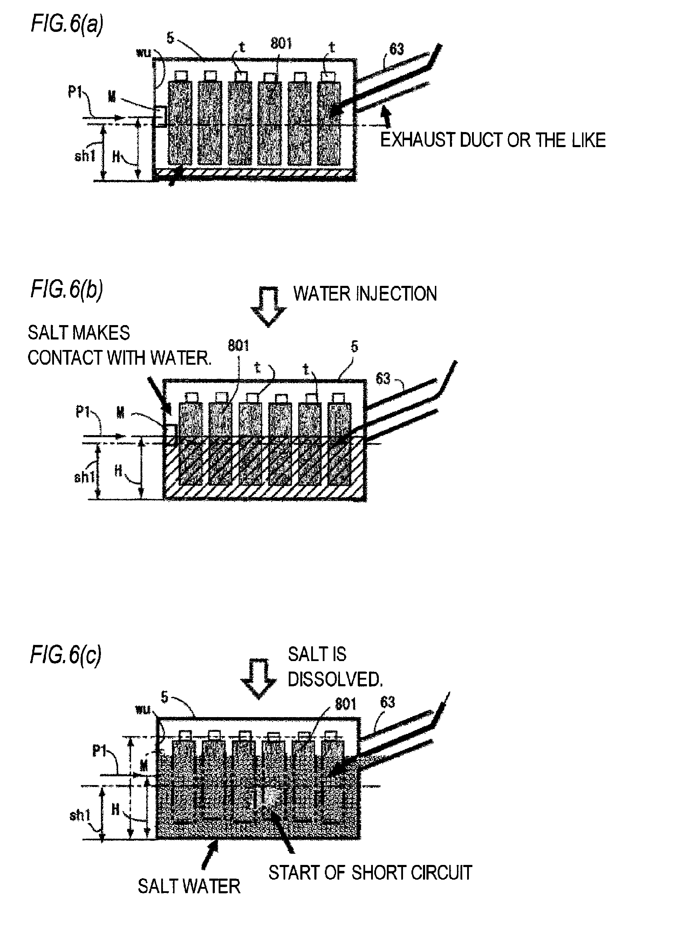

Sodium chloride is herein used as the electrolyte substance M. The installation position P1 of the container 70 accommodating the electrolyte substance M is herein inside the battery pack 5. The height position H of the installation position P1 from the lower face of the battery pack 5 is set to a predetermined water-submerged height, for example, as shown in FIGS. 6(a) to 6(c), a height corresponding to the amount of water submergence in which the heat generation of the battery can be suppressed, for example, the position in which the half-height sh1 or more of each battery cell 801 is submerged.

In addition, the installation position P1 (see FIG. 2) is disposed on the opposite side of the water injection port of the water injection route provided in the battery pack 5, that is, as shown in FIG. 2, the upward opening 506 or the opening 631 of the exhaust side air duct 63 connected to the battery pack 5, with the drive battery 8 placed therebetween. In other words, the drive battery 8 is disposed between the opening 641 of the air duct 64 and the installation position P1 of the electrolyte substance M.

It is assumed that, when a vehicle equipped with the battery energy discharge device according to the first embodiment configured as described above is traveling, the vehicle caused, for example, a collision accident and is damaged and fell into an emergency in which the vehicle became unable to travel.

In this case, after the rescue of the occupants of the vehicle, for the purpose of avoiding electric shock, the normally closed port 101 serving as the working hole of the floor 1 is opened, whereby the upward opening 506, for switch operation, connected thereto via the elastic cylindrical member 60 is opened, the handle 603 of the switch 60 just thereunder is rocked from the standby position p1 to the use position p2, and then the insertion plugs 601 and 601 connected to the handle 603 are pulled up and extracted, whereby the switch 60 is removed; as a result, the drive battery 8 of the battery pack 5 is disconnected from the high-voltage cables 11 extending from the electric power control apparatus 3 on the side of the electric rotating machine 1.

Then, tap water is injected through the upward opening 506. At this time , in the case that tap water cannot be injected through the upward opening 506 depending on the damaged state of the vehicle, tap water is injected through the exhaust side air duct 64, whereby the electric energy of the drive battery 8 is discharged and deactivated, and electric shock, firing, etc. are prevented.

At this time, in the case the water injection into the battery pack 5 progresses through the upward opening 506 or the air duct 64, the state of the water injection advances from the state shown in FIG. 6 (a) to the state shown in FIG. 6 (b) ; hence, the surface of the water rises and becomes higher than the half-height sh1 inside the battery pack 5. At this time, since the installation position P1 of the electrolyte substance is disposed above the half-height sh1 of the battery pack 5 as shown in FIG. 6(b), when the water has been supplied into the battery pack 5 up to the half-height H, it can be assumed that the cooling performance for the nearly central section of each battery cell 801 of the drive battery 8, wherein the temperature is apt to rise, has been obtained securely. For this reason, the cooling water injection being progressing continuously can be carried out safely.

Then, the surface of the water in the battery pack 5 rises continuously upward from the half-height sh1 of the battery pack 5, whereby it can be judged that the installation position P1 of the electrolyte substance M is submerged and that the dissolution of the electrolyte substance M starts. Then, in a state in which the heat generation of the drive battery 8 is suppressed, an electrolyte aqueous solution increases gradually and the terminal electrodes t of the battery cells are submerged, whereby the discharge of the drive battery 8 is promoted safely, the electric energy stored in the drive battery 8 is discharged and deactivated in a relatively short time; as a result, electric shock, firing, etc. can be prevented, and the movement and conveyance of the disabled vehicle using a wrecker truck or the like can be carried out safely hereafter.

In the above description, when the water injection progresses up to the half-height sh1 of the battery pack 5, that is, the predetermined water-submerged height of the drive battery 8 inside the battery pack 5, the electrolyte substance M starts to be dissolved in the water; in other words, setting has been done so that, after a certain level of battery cooling performance or higher has been obtained securely, the electrolyte substance M is dissolved in water and becomes the electrolyte aqueous solution, whereby at the time when the electrolyte aqueous solution makes contact with the terminal electrodes t on the upper side of the drive battery 8 and the discharge starts, the cooling performance for the battery has been securely obtained sufficiently; as a result, a situation in which the battery generates heat excessively can be prevented securely and firing can be prevented.

Furthermore, the installation position P1 is disposed on the opposite side of the water injection port of the water injection route provided in the battery pack 5, that is, the upward opening 506 or the opening 631 of the exhaust side air duct 63 connected to the battery pack 5, with the drive battery 8 placed therebetween; in other words, the drive battery 8 is disposed between the opening 631 of the air duct 63 and the installation position P1 of the electrolyte substance M.

Since the installation position P1 is securely obtained on the opposite side of the upward opening 506 serving as the water injection port or the opening 641, with the battery placed therebetween, it is possible to exclude the possibility that the electrolyte substance is dissolved by water splashes immediately after the start of the water injection and that the electrolyte aqueous solution makes contact with the terminal electrodes of the drive battery 8 before a sufficient amount of water accumulates inside the battery pack. As a result, it is possible to reduce the occurrence of a situation in which the electrolyte aqueous solution makes contact with the terminal electrodes t immediately after the water injection and heat is generated.

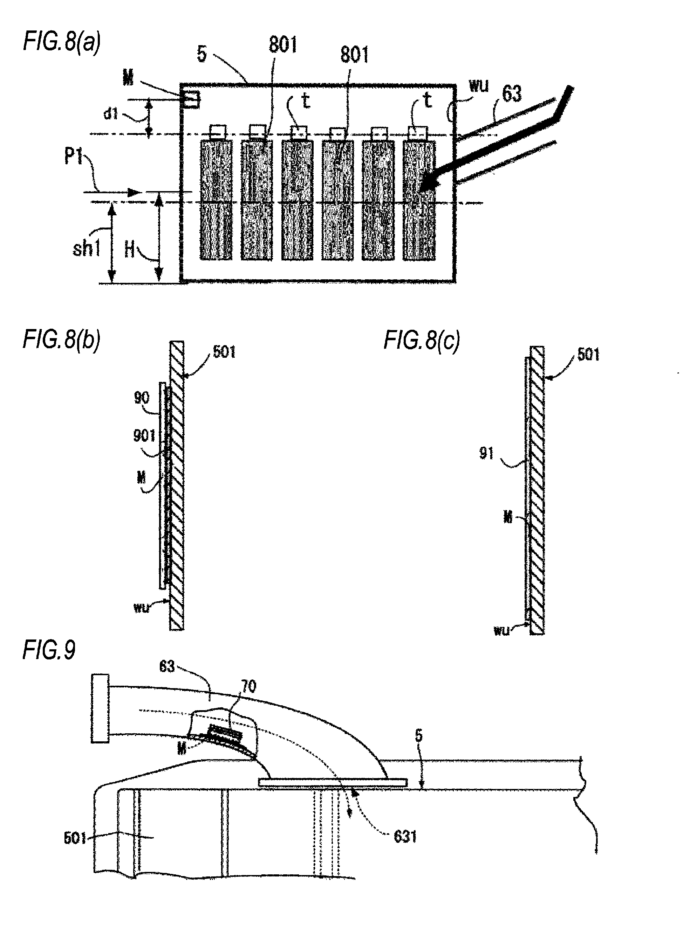

In the above description, the height position H of the installation position P1 of the electrolyte substance M from the lower face of the battery pack 5 is set at the position slightly above the height corresponding to the level at which the drive battery 8 is submerged up to the half-height sh1 thereof; however, instead of this setting, as a battery energy discharge device according to a second embodiment, for example, as shown in FIG. 8(a), the electrolyte substance M may be set so as to be installed above the terminal electrodes t of each battery cell 801 by a predetermined amount d1.

With the battery energy discharge device according to this second embodiment, after the cooling performance for the central section of the drive battery 8 has been securely obtained sufficiently and after the terminal electrodes are submerged, the water dissolves the electrolyte substance and then the electrolyte aqueous solution makes contact with the terminal electrodes; hence, it is possible to securely prevent a situation in which the electrolyte aqueous solution makes direct contact with the terminal electrodes, heat is generated immediately, and firing occurs; as a result, safety can be enhanced further.

In the above description, the electrolyte substance M is installed at the installation position P1 using the container 70; however, as a modification example, a configuration may also be used in which the electrolyte substance M is wrapped with a water soluble wafer and held in the container 70, and when the surface of water reaches the installation position P1, the wafer is dissolved and the electrolyte substance M drops. This case is advantageous in that the electrolyte aqueous solution can be formed quickly.

Next, as a battery energy discharge device according to a third embodiment, it may be possible, as shown in FIG. 8(b), that a sheet 90 containing the electrolyte substance M is directly bonded to the inner wall wu using an adhesive 901, and when the surface of water reaches the installation position P1, the water dissolves the electrolyte substance M to form the electrolyte aqueous solution. Furthermore, in a battery energy discharge device according to a fourth embodiment, it may also be possible, as shown in FIG. 8(c), that a paint coating 91 containing the electrolyte substance M is applied to the inner wall wu of the upper half section 501, and when the surface of water reaches the installation position P1, the water dissolves the electrolyte substance M contained in the paint coating 91 to form the electrolyte aqueous solution. With these third and fourth embodiments, the installation of the electrolyte substance M can be carried out at low cost.

Moreover, it may also be possible that the position located on the inner wall wu of the battery pack 5 and splashed with water only when water is supplied vigorously at the time of the water injection is set as the installation position P1 and that the electrolyte substance is disposed at the position; in this case, the degree of dissolution of the electrolyte substance can be adjusted by adjusting the amount of water to be injected.

What's more, positions where dew condensation occur when the battery is cool should be avoided as the installation position P1 at which the electrolyte substance is provided, whereby it is possible to prevent the electrolyte substance from being dissolved and from building up on the lower wall side of the battery pack 5 during normal state.

In the above description, the installation position P1 of the electrolyte substance M is provided inside the battery pack 5; however, alternatively, as the battery energy discharge device according to a fifth embodiment, it may also be possible, as shown in FIG. 9, that the container 70 preliminarily containing the electrolyte substance M is provided in the water filling route connected to the battery pack 5, for example, the exhaust side air duct 63, that is utilized securely and relatively easily in an emergency. In this case, the electrolyte substance M is dissolved in water when the water is injected into the exhaust side air duct 63, and the dissolved solution to be injected and having been converted into the electrolyte aqueous solution is supplied to the battery pack 5, whereby this embodiment is advantageous in the case that the electric energy stored in the drive battery 8 is required to be discharged in a relatively short time.

### Description of Reference Numerals and Signs

- 1: floor
- C: vehicle
- 5: battery pack
- 8: drive battery
- 63: exhaust side air duct (water filling route)
- 64: suction side air duct (water filling route)
- 70: container
- sh1: half-height of battery cell
- H: height position
- M: electrolyte substance
- P1: installation position of electrolyte substance

## Claims

1. A battery energy discharge device **characterized in that** an electrolyte substance is provided inside a battery pack accommodating a battery for driving a vehicle or inside a water injection route connected to the battery pack.

2. The battery energy discharge device according to claim 1, **characterized in that**
a terminal electrode is provided on an upper side of the battery, and a height position of the electrolyte substance from a lower face of the battery pack is set to a position in which the electrolyte substance is dissolved in water after the battery has securely obtained a predetermined water-submerged height.

3. The battery energy discharge device according to claim 1 or 2, **characterized in that**
the battery is disposed between a water injection port of the water injection route provided in the battery pack and an installation position of the electrolyte substance.

4. The battery energy discharge device according to any one of claims 1 to 3, **characterized in that**
the electrolyte substance is provided at a position higher than half-height of the battery pack.

5. The battery energy discharge device according to any one of claims 1 to 3, **characterized in that**
the electrolyte substance is provided above a terminal electrode.

## Amended claims

### Amended claims under Art. 19.1 PCT

**1.** A battery energy discharge device **characterized in that**
an electrolyte substance is provided inside a battery pack accommodating a battery for driving a vehicle or inside a water injection route connected to the battery pack, and
a terminal electrode is provided on an upper side of the battery, and a height position of the electrolyte substance from a lower face of the battery pack is set to a position in which the electrolyte substance is dissolved in water after the battery has securely obtained a predetermined water-submerged height.

**2.** The battery energy discharge device according to claim 1, **characterized in that**
the battery is disposed between a water injection port of the water injection route provided in the battery pack and an installation position of the electrolyte substance.

**3.** The battery energy discharge device according to claim 1 or 2, **characterized in that**
the electrolyte substance is provided at a position higher than half-height of the battery pack.

**4.** The battery energy discharge device according to claim 1 or 2, **characterized in that**
the electrolyte substance is provided above a terminal electrode.

**5.** A battery energy discharge device **characterized in that** an electrolyte substance is provided inside a water injection route connected to a battery pack accommodating a battery for driving a vehicle.
